# EUROPÄISCHE PATENTSCHRIFT

(11) **EP 3 485 180 B1**
(45) Veröffentlichungstag und Bekanntmachung des Hinweises auf die Patenterteilung: **01.06.2022**
(21) Anmeldenummer: 17742980.0
(22) Anmeldetag: 12.07.2017
(51) Int. Cl.: F16F 9/52, F16F 9/56, F16F 9/18

(54) **GLEISBREMSDÄMPFER**
RAIL BRAKE DAMPER
AMORTISSEUR DE FREIN DE VOIE

(30) Priorität: 12.07.2016 DE 102016212654
(43) Veröffentlichungstag der Anmeldung: 22.05.2019
(73) Patentinhaber: Stabilus GmbH, 56070 Koblenz (DE)
(72) Erfinder: PROBST, Ulrich, 56204 Hillscheid (DE); LÖHKEN, Lars, 53545 Linz am Rhein (DE); PIROTH, Raphael, 56077 Koblenz (DE); MÜLLER, Markus, 56072 Koblenz (DE)
(74) Vertreter: Weickmann & Weickmann PartmbB
(86) Internationale Anmeldenummer: PCT/EP2017/067563
(87) Internationale Veröffentlichungsnummer: WO 2018/011272

(56) Entgegenhaltungen:
- WO-A1-2006/029421
- DE-A1- 3 120 016
- FR-A1- 2 562 971
- US-A- 2 638 339
- US-A- 4 203 507
- US-A1- 2005 205 364

## Beschreibung

Die Erfindung betrifft einen Gleisbremsdämpfer gemäß dem Oberbegriff des Anspruchs 1.

Bei der Positionierung von Waggons an Gleisenden, insbesondere in Güterverteilzentren, besteht das Problem, dass durch nachfolgend auffahrende Waggons die bereits zu einem Zug zusammengestellten Waggons wieder angeschoben werden und die Tendenz haben, sich wieder in Bewegung zu setzen.

Dies kann beispielsweise an Gleisenden dazu führen, dass die Waggons in unerwünschter Weise gegen einen Prellbock geschoben werden. Im ungünstigsten Fall kann sogar die Gefahr bestehen, dass der Waggon entgleist. Darüber hinaus ist es bei durchgängigen Gleisen, d.h. Gleisen mit offenem Gleisende, unerwünscht, dass ein Waggon das Gleis verlässt, bevor alle Waggons des Zuges vollständig miteinander verbunden sind. Ein dritter Anwendungsfall sind schließlich Gleise am Abrollberg, an denen die Waggons auf die verschiedenen Gleise verteilt werden. Auch hier ist es unerwünscht, wenn sich die Waggons selbsttätig in Bewegung setzen.

Diese Probleme haben im Laufe der Zeit immer mehr an Bedeutung gewonnen, da beispielsweise die Reibung in den Achslagern der Waggons mittlerweile in einem Maße optimiert wurde, dass die Waggons nicht mehr reibungsbedingt abgebremst werden.

Aus der gattungsbildenden DE 31 20 016 C2 ist ein Stoßdämpfer bekannt, welcher bei sehr niedrigen Geschwindigkeiten des Waggons und quasi-statischen Bedingungen praktisch keine Bremswirkung erzeugt und erst ab einer vorbestimmten Überrollgeschwindigkeit aktiviert wird. Dieser Dämpfer ist daher nicht in der Lage, das vorstehend genannte Problem zu lösen. Somit müssen für niedrige Überrollgeschwindigkeiten und quasi-stationäre Bedingungen zusätzliche Bremssysteme vorgesehen werden.

Ferner sei auf die Dokumente US 4 203 507 A, US 2 638 339 A1, US 2005/205364 A1, WO 2006/029421 A1 und FR 2 562 971 A1 hingewiesen.

Es ist daher Aufgabe der Erfindung, einen Gleisbremsdämpfer der eingangs genannten Art anzugeben, der den vorstehend erläuterten Problemen entgegenzuwirken vermag.

Diese Aufgabe wird erfindungsgemäß durch einen Gleisbremsdämpfer gemäß Anspruch 1 gelöst.

Fährt ein Waggon langsam gegen das freie Ende der Kolbenstange an und versucht den Kolben in den Zylinder hinein zu drücken, so bleibt der wenigstens eine Kolbenkanal unter der Wirkung der Federvorspannung zunächst noch durch das wenigsten eine Verschlusselement geschlossen. Die Schließkraft der Federvorspannung ist dabei derart gewählt, dass das wenigstens eine Verschlusselement erst dann vom Kolben abgehoben wird, wenn auf die Kolbenstange eine vorbestimmte Kraft einwirkt, die aber immer noch kleiner ist als jene Kraft, die den Waggon zum Entgleisen bringen würde. Bis zum Abheben des wenigstens einen Verschlusselements vom Kolben wirkt der Gleisbremsdämpfer als starres Hindernis, das in der Lage ist, den Waggon an Ort und Stelle zu halten. Wurde die vorbestimmte Kraft überschritten, d.h. nach dem Abheben des wenigstens einen Verschlusselements vom Kolben, kann Hydraulikfluid von der der Kolbenstange abgewandten Arbeitskammer durch den wenigstens einen Kolbenkanal in die der Kolbenstange zugewandte Arbeitskammer strömen, so dass sich der Kolben in den Zylinder hinein bewegen kann. Der Widerstand, den das Dämpfungsventil der Strömung des Hydraulikfluids entgegensetzt, bremst den Waggon ab.

Der erfindungsgemäße Gleisbremsdämpfer stellt somit bei niedrigen Überrollgeschwindigkeiten und quasi-stationären Bedingungen ein starres Hindernis dar, welches in der Lage ist, den Waggon an Ort und Stelle zu halten. Bei Überschreiten einer vorbestimmten Überrollgeschwindigkeit, genauer gesagt einer vorbestimmten von dem Waggon auf den Gleisbremsdämpfer ausgeübten Kraft, wirkt der Gleisbremsdämpfer hingegen als Dämpfungselement, welches die Bewegung des Waggons abbremst.

Grundsätzlich ist es denkbar, dass das wenigstens eine Verschlusselement selbst die Federvorspannkraft bereitstellt, beispielsweise indem es als Federelement ausgebildet ist.

Laut der Erfindung ist es so, dass das wenigstens eine Verschlusselement mittels wenigstens einer gesondert ausgebildeten Ventilvorspannfeder im Sinne des Verschließens des wenigstens einen Kolbenkanals federvorgespannt ist. Das wenigstens eine Verschlusselement muss als Kugel ausgebildet sein.

In Abhängigkeit von dem jeweiligen spezifischen Anwendungsfall kann das wenigstens eine Verschlusselement aus Metall, beispielsweise Stahl oder Kupfer, oder aus Kunststoff, beispielsweise Polytetrafluorethylen (PTFE), gebildet sein.

Das Öffnungsverhalten der Dämpfungseinrichtung im Druckbetrieb, d.h. beim Einfahren der Kolbenstange in den Zylinder, wird durch das Zusammenspiel der in Öffnungsrichtung gerichteten Kraft und der in Schließrichtung gerichteten Kraft bestimmt. Die in Öffnungsrichtung des wenigstens einen Dämpfungsventils gerichtete Kraft berechnet sich dabei als das Produkt aus dem Hydraulikdruck, der in der von der Kolbenstange abgewandten Arbeitskammer herrscht, und der Gesamtquerschnittsfläche des wenigstens einen Kolbenkanals. Und die in Schließrichtung gerichtete Kraft kann in guter Näherung gleich der Federvorspannkraft gesetzt werden, da der Hydraulikdruck, der in der die Kolbenstange beinhaltenden Arbeitskammer herrscht, dann, wenn ein Güterwaggon auf die Kolbenstange einwirkt, verglichen mit dem Hydraulikdruck, der in der von der Kolbenstange abgewandten Arbeitskammer herrscht, vernachlässigbar ist. Ist eine Mehrzahl von Ventilvorspannfedern vorhanden, so berechnet sich die in Schließrichtung gerichtete Kraft als die Summe der Federvorspannkräfte der Ventilvorspannfedern.

Erfindungsgemäß muss eine Mehrzahl von Kolbenkanälen vorgesehen sein. Auf deren zugeordnete Verschlusselemente kann jeweils eine gesonderte Ventilvorspannfeder einwirken. Durch eine derart ausgebildete Dämpfungseinrichtung könnte ein gestuftes Öffnungsverhalten bereitgestellt werden, gemäß dem die Dämpfungseinrichtung bei Überschreiten eines vorbestimmten Grenzdrucks nicht schlagartig öffnet, sondern zunächst eine Voröffnung, beispielsweise nur eines Kolbenkanals, stattfindet, bevor schließlich alle Kolbenkanäle freigegeben werden.

Die wenigstens eine Ventilvorspannfeder kann unmittelbar auf das zugeordnete Verschlusselement einwirken. Erfindungsgemäß ist es so, dass die wenigstens eine Ventilvorspannfeder mittels eines Stützelements auf das zugeordnete Verschlusselement einwirkt. Ja es ist sogar möglich, dass eine Ventilvorspannfeder über ein Stützelement auf eine Mehrzahl von Verschlusselementen einwirkt.

Erfindungsgemäß ist es so, dass der Kolben von einer Mehrzahl von die Arbeitskammern verbindenden Kolbenkanälen durchsetzt ist, von denen jedem ein gesondertes Verschlusselement zugeordnet ist, wobei den Verschlusselementen eine gemeinsame Stützplatte zugeordnet ist, auf weiche die Ventilvorspannfeder einwirkt. Dies ermöglicht es, die jeweils gewünschte Dämpfungskraft durch geeignete Wahl der Anzahl und der jeweiligen Querschnittsfläche der Kolbenkanäle in Anpassung an die jeweils eingesetzte Ventilvorspannfeder einzustellen. Beispielsweise kann die Ventilvorspannfeder von einem Tellerfederpaket gebildet sein.

Um eine Bewegung der Ventilvorspannfeder zusammen mit der Kolbenstange ermöglichen zu können, wird vorgeschlagen, dass sich die Ventilvorspannfeder an einem mit der Kolbenstange betriebsfest verbundenen Element abstützt. Das mit der Kolbenstange betriebsfest verbundene Element kann beispielsweise von einer Hülse gebildet sein, die mit der Kolbenstange beispielsweise durch Crimpen verbunden sein kann.

Das mit der Kolbenstange betriebsfest verbundene Element kann im Zusammenhang mit der vorliegenden Erfindung auch noch eine weitere Funktion übernehmen. Und zwar kann sein von der Ventilvorspannfeder abgewandtes Ende zum Eingriff mit einer Endanschlagsfeder dienen, die ebenfalls als Tellerfederpaket ausgebildet sein kann. Diese Endanschlagsfeder hat die Aufgabe, im Endanschlag die Schlagenergie aufzufangen, mit der Kolbenstange und Kolben nach oben schnellen, wenn der Waggon den Dämpfer wieder freigibt.

Wie dies an sich bekannt ist, kann die Zylinder-Kolben-Anordnung ferner einen gasgefüllten Ausgleichsraum aufweisen. Die Gasfüllung dieses Ausgleichsraums kann dann, wenn sich die Kolbenstange in den Zylinder hinein bewegt, komprimiert werden und so Raum für das durch die Kolbenstange verdrängte Volumen an Hydraulikfluid bereitstellen.

In Weiterbildung der Erfindung wird vorgeschlagen, dass jenem Ende des Zylinders, an welchem die Kolbenstange aus dem Zylinder austritt, benachbart in der der Kolbenstange zugewandten Arbeitskammer ein Einsatzelement angeordnet ist, welches zumindest an seinem dem Kolben zugewandten Ende die Kolbenstange oder ein mit dieser verbundenes Element unter Belassung eines Spalts umgibt. In diesem Einsatzelement kann der gasgefüllte Ausgleichsraum vorgesehen sein. Dabei stellt die Tatsache, dass das Einsatzelement bis auf die Belassung eines Spalts an die Kolbenstange heranreicht, sicher, dass sich Strömungsturbulenzen, die von dem Hydraulikfluid hervorgerufen werden, welches mit hoher Geschwindigkeit aus den Kolbenkanälen austritt, nicht auf die Gasfüllung des Ausgleichsraums auswirken können, insbesondere nicht zu einem Aufschäumen des Hydraulikfluids mittels der Gasfüllung führen können. Durch den zwischen der Kolbenstange und dem Einsatzelement belassenen Spalt strömt lediglich eine Menge an Hydraulikfluid, welche dem Volumen des Abschnitts der Kolbenstange entspricht, der sich in den Zylinder hinein oder aus dem Zylinder heraus bewegt hat. Bei dieser vergleichsweise geringen Menge an Hydraulikfluid besteht die Gefahr des Aufschäumens nicht.

Eine weitere Funktion des Einsatzelements kann es sein, eine Abstützung für die Endanschlagsfeder bereitzustellen. Darüber hinaus kann das Einsatzelement auch noch als Anschlag für die Ventilvorspannfeder dienen, so dass diese die Wirkung der Endanschlagsfeder unterstützen kann.

Um es ermöglichen zu können, dass sich die Kolbenstange wieder aus dem Zylinder heraus bewegt, wird in Weiterbildung der Erfindung vorgeschlagen, dass die Dämpfungseinrichtung wenigstens ein weiteres Dämpfungsventil umfasst mit wenigstens einem den Kolben im Sinne einer Verbindung der beiden Arbeitskammern durchsetzenden weiteren Kolbenkanal und wenigstens einem dem weiteren Kolbenkanal zugeordneten weiteren Verschlusselement, wobei das wenigstens eine weitere Verschlusselement von wenigstens einer weiteren Ventilvorspannfeder im Sinne des Verschließens des wenigstens einen weiteren Kolbenkanals vorgespannt und von dem Hydraulikdruck, welcher in der von der Kolbenstange durchsetzten Arbeitskammer herrscht, im Sinne des Öffnens des wenigstens einen weiteren Dämpfungsventils beaufschlagt ist. Die Dämpfungskraft des wenigstens einen weiteren Dämpfungsventils ist dabei vorzugsweise derart gewählt, dass einerseits der ausgefahrene Zustand der Kolbenstange und damit der Funktionsbereitschaftszustand des Gleisbremsdämpfers möglichst schnell wieder hergestellt wird, nachdem der Waggon den Gleisbremsdämpfer wieder freigegeben hat, dass aber andererseits die Schlagenergie von Kolbenstange und Kolben auf einen Wert begrenzt wird, der die Langlebigkeit des Gleisbremsdämpfers nicht beeinträchtigt.

Auch in diesem Fall ist es möglich, dass der Kolben von einer Mehrzahl von die Arbeitskammern verbindenden weiteren Kolbenkanälen durchsetzt ist, von denen jedem ein gesondertes weiteres Verschlusselement zugeordnet ist, wobei den weiteren Verschlusselementen eine gemeinsame weitere Stützplatte zugeordnet ist, auf weiche die weitere Ventilvorspannfeder einwirkt. Grundsätzlich bestehen aber auch für die Komponenten des wenigstens einen weiteren Dämpfungsventils die Variationsmöglichkeiten, die vorstehend für das wenigstens eine Dämpfungsventil erläutert worden sind.

Das Öffnungsverhalten der Dämpfungseinrichtung im Ausschubbetrieb, d.h. beim Ausfahren der Kolbenstange aus dem Zylinder, wird durch das Zusammenspiel der in Öffnungsrichtung des wenigstens einen weiteren Dämpfungsventils gerichteten Kraft und der in Schließrichtung gerichteten Kraft bestimmt. Die in Öffnungsrichtung gerichtete Kraft berechnet sich dabei als das Produkt aus dem Hydraulikdruck, der in der die Kolbenstange beinhaltenden Arbeitskammer herrscht, und der Gesamtquerschnittsfläche des wenigstens einen weiteren Kolbenkanals. Und die in Schließrichtung gerichtete Kraft kann aufgrund der Wirkung der Ausschubvorrichtung in guter Näherung gleich der Federvorspannkraft der wenigstens einen weiteren Ventilvorspannfeder gesetzt werden. Ist eine Mehrzahl von weiteren Ventilvorspannfedern vorhanden, so berechnet sich die in Schließrichtung gerichtete Kraft als die Summe der Federvorspannkräfte der weiteren Ventilvorspannfedern.

Beispielsweise kann die wenigstens eine weitere Ventilvorspannfeder von einer Schraubenfeder, beispielsweise einer Schraubendruckfeder, einer Tellerfeder oder dergleichen gebildet sein. Ferner kann sich die wenigstens eine weitere Ventilvorspannfeder an einem Element abstützen, das mit einem den Kolben durchsetzenden Abschnitt der Kolbenstange betriebsfest verbunden ist. Dieses Element kann beispielsweise von einer Platte gebildet sein, welches mit dem in dem Zylinder angeordneten Ende der Kolbenstange mittels einer Mutter verschraubt ist.

In Weiterbildung der Erfindung wird vorgeschlagen, dass die Ausschubanordnung wenigstens eine Ausschubfeder, beispielsweise wenigstens eine Schraubendruckfeder oder/und wenigstens eine Tellerfeder, welche in der von der Kolbenstange abgewandten Arbeitskammer angeordnet ist, oder/und wenigstens ein Druckgasvolumen umfasst. Grundsätzlich würde das Druckgasvolumen ausreichen, welches zum Ausgleich des von der Kolbenstange beim Einschieben in den Zylinder eingenommenen und beim Ausfahren aus dem Zylinder wieder freigegebenen Volumens ohnehin vorgesehen werden muss. Nach dem Einschieben der Kolbenstange im Zuge der Vorüberbewegung eines Güterwaggons würde sich nämlich dann, wenn das wenigstens eine weitere Dämpfungsventil geschlossen bliebe, so dass kein Hydraulikfluid zwischen den Arbeitskammern ausgetauscht werden kann, ein Zustand einstellen, in welchem der Kolben stillsteht. In diesem Zustand würde in der die Kolbenstange aufnehmenden Arbeitskammer ein höherer Druck herrschen als in der von der Kolbenstange abgewandten Arbeitskammer. Dies ist durch die Tatsache bedingt, dass der Kolben der die Kolbenstange aufnehmenden Arbeitskammer aufgrund der vom Querschnitt der Kolbenstange eingenommenen Fläche eine kleinere Fläche darbietet als der von der Kolbenstange abgewandten Arbeitskammer. Ist das wenigstens eine weitere Dämpfungsventil derart ausgebildet und bemessen, dass die Druckdifferenz zwischen den beiden Arbeitskammern ausreicht, das wenigstens eine weitere Dämpfungsventil zu öffnen, so kann sich der vorstehend beschriebene Zustand nicht einstellen und die Kolbenstange wird kontinuierlich ausgeschoben. In diesem Zusammenhang sorgt das Druckgasvolumen dafür, dass der Wert des Drucks in einer Größenordnung gehalten wird, die ein zügiges Ausschieben der Kolbenstange aus dem Zylinder sicherstellt. Das zügige Ausschieben der Kolbenstange kann weiter dadurch unterstützt werden, dass die Ausschubanordnung eine Ausschubfederanordnung umfasst, die beispielsweise zwei ineinander angeordnete Schraubendruckfedern umfassen kann.

Um die im Betrieb des Gleisbremsdämpfers dissipierte Energie in einfacher Weise an die äußere Umgebung abführen zu können, kann vorgesehen sein, dass der Zylinder an seiner äußeren Oberfläche mit Kühlrippen ausgebildet ist.

In Weiterbildung der Erfindung wird vorgeschlagen, dass die Zylinder-Kolben-Anordnung in einem Gehäuse aufgenommen ist, welches ein dem Zylinder zugeordnetes Bodenteil und ein der Kolbenstange zugeordnetes, relativ zum Bodenteil verschiebbares Deckelteil umfasst.

In einer unteren Begrenzungsfläche des Bodenteils kann wenigstens eine Öffnung vorgesehen sein, durch welche die in dem Gehäuse vorhandene Luft beim Einfahren des Deckelteils in das Bodenteil ausgetrieben und bei Wieder-Ausfahren des Deckelteils Frischluft in das Gehäuse eingesaugt werden kann. Hierdurch entsteht in dem Gehäuse eine Luftströmung, die sich an den Kühlrippen des Zylinders vorbeibewegt und somit für eine wirksame Kühlung der Zylinder-Kolben-Anordnung sorgt. Dies ist insbesondere deshalb von Bedeutung, weil der Gleisbremsdämpfer pro Arbeitshub so viel Energie absorbiert, dass er sich um etwa 1,0°K bis 1,5°K erwärmt. In Anbetracht der hohen Anzahl von Waggons, die beispielsweise ein Güterzug aufweisen kann, und der Tatsache, dass jeder Waggon üblicherweise bis zu vier Achsen aufweist, sieht man leicht ein, dass eine effektive Kühlung des Gleisbremsdämpfers unabdingbar ist.

Sind die Waggons auf einem Gleis zu einem Güterzug zusammengestellt worden, so werden sie von einer Rangierlokomotive aus dem jeweiligen Gleis ausgezogen. Dies zieht eine hohe Anzahl von Aktivierungen der Gleisbremsdämpfer in sehr kurzer Zeit nach sich und birgt damit die Gefahr einer Überhitzung und damit Beschädigung, wenn nicht gar Zerstörung der Gleisbremsdämpfer. Aber auch die für die Aktivierung der Gleisbremsdämpfer erforderliche Schleppleistung der Rangierlokomotive ist nachteilig.

Um diesem Problem zu begegnen wurde im Stand der Technik bereits vorgeschlagen, die Gleisbremsdämpfer als Ganzes seitlich wegzuklappen oder axial zurückzuziehen, um deren Aktivierung beim Ausziehen des Güterzugs aus dem jeweiligen Gleis zu umgehen.

Diese Ausführungsformen sind jedoch allesamt konstruktiv aufwendig, insbesondere auch deshalb, weil der Abklapp- bzw. Rückziehmechanismus dazu ausgelegt sein muss, die im bestimmungsgemäßen Gebrauch auftretenden Aktivierungskräfte tragen zu können.

Zur Lösung dieses weiteren Problems wird in Weiterbildung der Erfindung vorgeschlagen, dass die Dämpfungseinrichtung eine dem wenigstens einen Dämpfungsventil zugeordnete Dämpfkraftverringerungseinrichtung umfasst, insbesondere eine Dämpfkraftverringerungseinrichtung, welche dazu ausgelegt ist, die Dämpfkraft des wenigstens einen Dämpfungsventils bei einem Anstieg der Temperatur des Gleisbremsdämpfers zu verringern. Eine geringere Dämpfkraft beim Einschieben der Kolbenstange in den Zylinder hat auch eine geringere Energiedissipation und damit eine geringere Erwärmung des Gleisbremsdämpfers zur Folge.

Nimmt die Dämpfkraft bei Erhöhung der Temperatur stetig ab, so kann eine Begrenzung der Betriebstemperatur des Gleisbremsdämpfers erreicht werden. Hierzu kann beispielsweise vorgesehen sein, dass die dem wenigstens einen Dämpfungsventil zugeordnete Dämpfkraftverringerungseinrichtung eine sich bei einer Temperaturänderung selbsttätig verstellende Stellvorrichtung umfasst. Beispielsweise kann eine derartige Stellvorrichtung von einer Memorymetalleinheit oder/und einer Dehnwachseinheit gebildet sein. Diese Ausgestaltung der Stellvorrichtung hat den weiteren Vorteil, dass der Gleisbremsdämpfer als in sich geschlossene, autonom funktionierende Einheit ausgebildet sein kann, die frei von Anschlüssen zur Zufuhr von Energie und/oder Signalen ist.

Grundsätzlich ist es jedoch auch denkbar, dass die dem wenigstens einen Dämpfungsventil zugeordnete Dämpfkraftverringerungseinrichtung eine elektrisch oder/und elektromotorisch oder/und elektromagnetisch oder/und pneumatisch oder/und hydraulisch betätigbare Stellvorrichtung umfasst. Eine derartige Stellvorrichtung kann beispielsweise betätigt werden, bevor die Rangierlokomotive damit beginnt, den Güterzug aus dem jeweiligen Gleis auszuziehen. Mittels einer derartigen Stellvorrichtung ist es auch möglich, die Dämpfkraft des wenigstens einen Dämpfungsventils im Wesentlichen auf Null zu reduzieren, beispielsweise indem man einen Bypass zwischen den beiden Arbeitskammern des Zylinders oder eine von der von der Kolbenstange abgewandten Arbeitskammer zu einem Pufferbehälter führende, im Wesentlichen dämpfungsfreie Leitung öffnet.

Zusätzlich oder alternativ kann aber auch vorgesehen sein, dass die Dämpfungseinrichtung eine dem wenigstens einen weiteren Dämpfungsventil zugeordnete Dämpfkrafterhöhungseinrichtung umfasst, insbesondere eine Dämpfkrafterhöhungseinrichtung, welche dazu ausgelegt ist, die Dämpfkraft des wenigstens einen weiteren Dämpfungsventils bei einem Anstieg der Temperatur des Gleisbremsdämpfers zu erhöhen.

Bezüglich der Stellvorrichtung zur Betätigung der Dämpfkrafterhöhungseinrichtung kann auf die vorstehenden Ausführungen zur Stellvorrichtung zur Betätigung der Dämpfkraftverringerungseinrichtung verwiesen werden.

Mittels einer derartigen Dämpfkrafterhöhungseinrichtung kann die Ausfahrbewegung der Kolbenstange nach einer erfolgten Betätigung des Gleisbremsdämpfers verlangsamt werden. Hierdurch kann erreicht werden, dass sie zu Beginn der nächstfolgenden Betätigung noch nicht wieder vollständig ausgefahren ist, so dass bei der nächsten Betätigung entsprechend weniger Energie dissipiert wird, was wiederum eine geringere Erwärmung des Gleisbremsdämpfers zur Folge hat. Wird die Dämpfkraft des wenigstens einen weiteren Dämpfungsventils auf im Wesentlichen Unendlich erhöht, so kann eine Ausfahrbewegung der Kolbenstange im Wesentlichen vollständig unterbunden werden.

Zusätzlich oder alternativ kann aber auch vorgesehen sein, dass der Gleisbremsdämpfer eine Sperrvorrichtung umfasst, welche dazu ausgelegt ist, die aus Kolben und Kolbenstange gebildete Einheit in einem in den Zylinder eingefahrenen Zustand der Kolbenstange zu halten. Auch durch eine derartige Sperrvorrichtung kann eine Ausfahrbewegung der Kolbenstange verhindert werden.

Bezüglich der Stellvorrichtung zur Betätigung der Sperrvorrichtung kann wiederum auf die vorstehenden Ausführungen zur Stellvorrichtung zur Betätigung der Dämpfkraftverringerungseinrichtung verwiesen werden.

Die Erfindung wird im Folgenden an einem Ausführungsbeispiel anhand der beigefügten Zeichnungen näher erläutert werden. Es stellt dar:
- Figur 1: eine schematische Darstellung eines in einem Gleisbett angeordneten, erfindungsgemäßen Gleisbremsdämpfers;
- Figur 2: eine Schnittansicht des erfindungsgemäßen Gleisbremsdämpfers;
- Figur 3: eine vergrößerte Schnittansicht eines Details aus Figur 2;
- Figuren 4a und 4b: Schnittansichten des erfindungsgemäßen Gleisbremsdämpfers, welche verschiedene Ausführungsformen von Hilfsvorrichtungen zur Vermeidung einer Überhitzung des Gleisbremsdämpfers aufweisen.

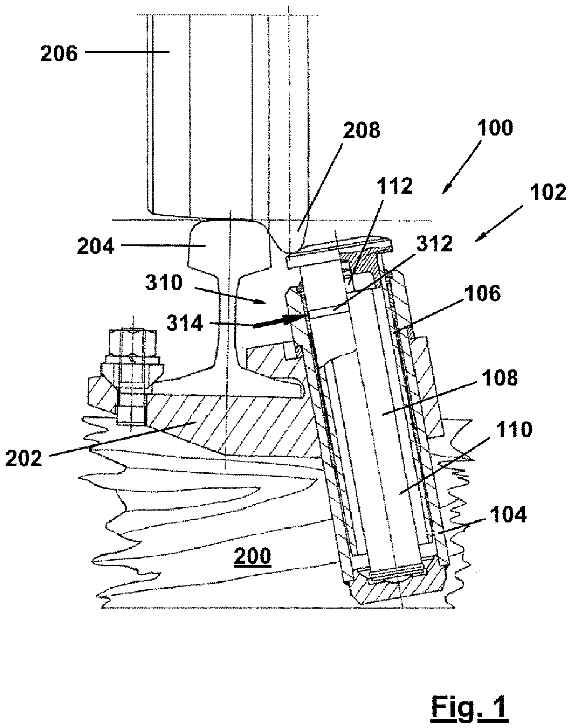

In Figur 1 ist ein erfindungsgemäßer Gleisbremsdämpfer ganz allgemein mit 100 bezeichnet. Der Gleisbremsdämpfer 100 umfasst ein Gehäuse 102 mit einem Bodenteil 104 und einen relativ dem Bodenteil 104 linear verschiebbaren Deckelteil 106. In dem Gehäuse 102 ist eine Zylinder-Kolben-Anordnung 108 aufgenommen mit einem Zylinder 110, der mit dem Bodenteil 104 betriebsfest verbunden ist, und einer Kolbenstange 112, die mit dem Deckelteil 106 betriebsfest verbunden ist.

Der Gleisbremsdämpfer 100 ist in einem Gleisbett 200 angeordnet. Insbesondere erkennt man eine mittels einer Schwelle 202 in dem Gleisbett 200 verlegte Schiene 204. Ferner ist in Figur 1 ein Rad 206 eines (nicht dargestellten) Waggons gezeigt, dessen Radkranz 208 gerade auf den Gleisbremsdämpfer 100 einwirkt.

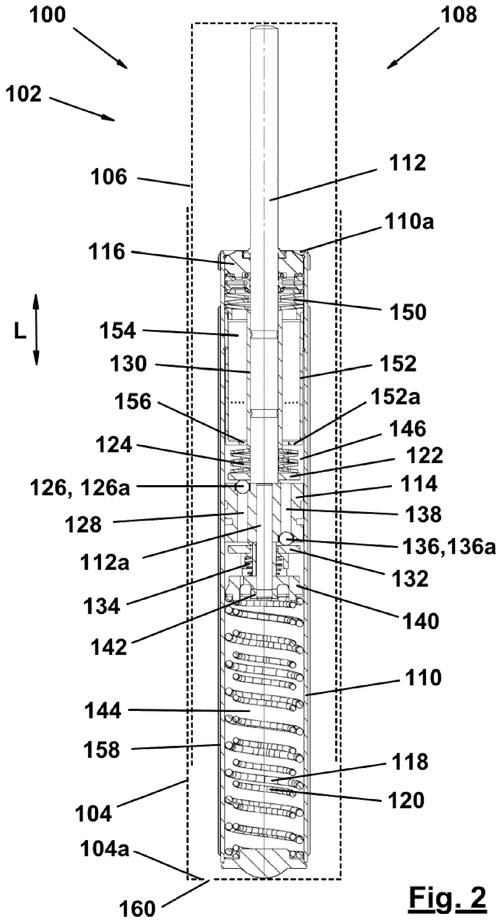

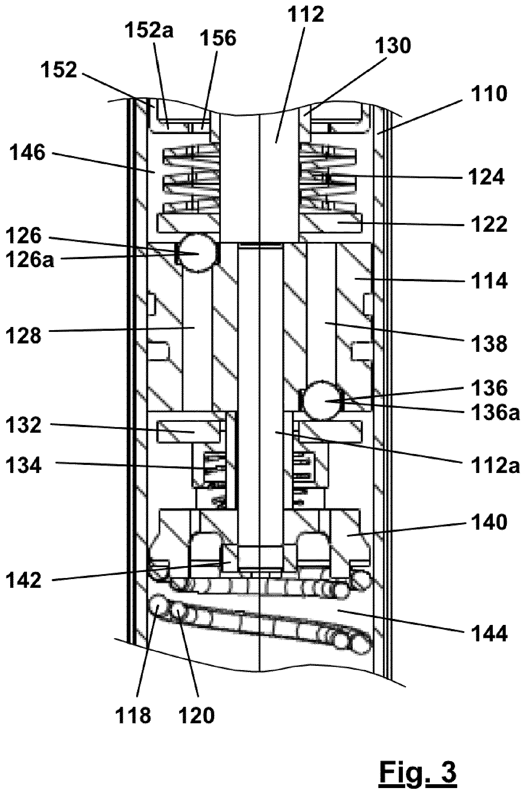

Mit Bezug auf die Figuren 2 und 3 soll nun der Aufbau der Zylinder-Kolben-Anordnung 108 im Detail beschrieben werden:
In dem Innenraum des Zylinders 110 ist ein Kolben 114 in Längsrichtung L des Zylinders 110 verschiebbar aufgenommen. Die an dem Kolben 114 befestigte Kolbenstange 112 tritt an dem in Figur 2 oberen Ende 110a des Zylinders 110 aus diesem aus. Die Kolbenstange 112 ist dabei mittels einer Führungs- und Dichtungseinheit 116 in dem Zylinder 110 geführt.

Auf der von der Kolbenstange 112 abgewandten Seite des Kolbens 114 wirken zwei Schraubendruckfedern 118 und 120 auf den Kolben 114 ein, so dass das freie Ende der Kolbenstange 112 in einem von äußeren Kräften unbeeinflussten Grundzustand aus dem Zylinder 110 herausragt. Dieser Grundzustand ist in Figur 2 dargestellt.

In Figur 2 oberhalb des Kolbens 114 ist eine Stützplatte 122 vorgesehen, welche mittels eines Federpakets 124 gegen die Ventilkugeln 126a von Kugelventilen 126 (in Figur 2 ist nur eines dargestellt) vorgespannt ist. Die Kugelventile 126 dienen zum Verschließen von den Kolben 114 in Längsrichtung L durchsetzenden Durchgangsöffnungen 128 des Kolbens 114. Durch die Ventilkugeln 126a ist stets ein vorbestimmter Mindestabstand zwischen dem Kolben 114 und der Stützplatte 122 vorhanden.

An seinem oberen Ende stützt sich das Federpaket 124 an einer Hülse 130 ab, welche mit der Kolbenstange 112 durch Crimpen verbunden ist.

In Figur 2 unterhalb des Kolbens 114 ist eine Stützplatte 132 vorgesehen, welche mittels einer Schraubendruckfeder 134 gegen die Ventilkugeln 136a von weiteren Kugelventilen 136 (in Figur 2 ist nur eines dargestellt) vorgespannt ist. Die weiteren Kugelventile 136 dienen zum Verschließen von den Kolben 114 in Längsrichtung L durchsetzenden weiteren Durchgangsöffnungen 138 des Kolbens 114. Durch die Ventilkugeln 136a ist stets ein vorbestimmter Mindestabstand zwischen dem Kolben 114 und der Stützplatte 132 vorhanden.

An ihrem unteren Ende stützt sich die Schraubendruckfeder 134 an einem Abschlusselement 140 ab, welches mittels einer Mutter 142 mit einem den Kolben 114 durchsetzenden Abschnitt 112a der Kolbenstange 112 betriebsfest verbunden ist.

Fährt ein Waggon langsam gegen das freie Ende der Kolbenstange 112 bzw. des Deckelteils 106 an und versucht den Kolben 114 in den Zylinder 110 hinein zu drücken, so verschließt das Kugelventil 136 die Durchgangsöffnung 138 des Kolbens 114, während das Kugelventil 126 die Tendenz hat, die Durchgangsöffnung 128 freizugeben. Allerdings wird das Öffnen der Durchgangsöffnung 128 durch die Ventilplatte 122 verhindert, welche die Ventilkugel 126a unter dem Einfluss des Federpakets 124 auf dem Ventilsitz des Kugelventils 126 hält. Die Schließkraft des Federpakets 124 ist derart gewählt, dass die Ventilplatte 122 vom Kolben 114 abgehoben wird, wenn auf die Kolbenstange 112 eine vorbestimmte Kraft einwirkt, die aber immer noch kleiner ist als jene Kraft, die den Waggon zum Entgleisen bringen würde. Nach dem Öffnen des Kugelventils 126 kann Hydraulikfluid von der unteren Arbeitskammer 144 durch die Durchgangsbohrungen 128 des Kolbens 114 in die obere Arbeitskammer 146 strömen, so dass sich der Kolben 114 in den Zylinder 110 hinein bewegt. Aufgrund der langsamen Bewegung des Waggons bewegt sich auch der Kolben 114 langsam in den Zylinder 110 hinein, so dass ein geringes Abheben der Ventilkugel 126a vom Kolben 114 genügt. Dies hat einen geringen Öffnungsquerschnitt zur Folge, so dass der Dämpfer der Bewegung des Waggons eine vorbestimmte Dämpfungskraft entgegengesetzt.

Hat der Waggon den Dämpfer 100 passiert, so dass das freie Ende der Kolbenstange 112 wieder kraftlos ist, so drücken die Schraubendruckfedern 118 und 120 den Kolben 114 wieder nach oben in die in Figur 2 dargestellte Grundstellung. Dabei kann das Hydraulikfluid aus der oberen Arbeitskammer 146 an der Stützplatte 122 vorbei in die Durchgangsöffnungen 138 des Kolbens 114 und unter Öffnen der Kugelventile 136 in die untere Arbeitskammer 144 strömen.

Fährt ein Waggon schnell gegen das freie Ende der Kolbenstange 112 an, so wird die für das Öffnen des Kugelventils 126 erforderliche Kraft aufgrund der größeren Dynamik schneller erreicht, so dass der Blockierzustand nicht bzw. nur für kurze Zeit vorliegt, und das Einfahren der Kolbenstange 112 bzw. des Kolbens 114 in den Zylinder 110 durch das Federpaket 124 im Zusammenwirken mit der Ventilplatte 122 gedämpft wird. Aufgrund der größeren Dynamik wird die Ventilkugel 126a in einem dieser Dynamik entsprechenden Maße vom Kolben 114 abgehoben. Insgesamt ergibt sich ein Öffnungsquerschnitt, der von der Geschwindigkeit des Waggons abhängt, und zwar derart, dass die Dämpfungskraft im Wesentlichen geschwindigkeitsunabhängig ist. Auf diese Weise kann dem Waggon unabhängig von seiner Geschwindigkeit stets die maximal mögliche kinetische Energie entzogen werden.

Hat der Waggon den Stoßdämpfer passiert, so erfolgt das Ausfahren des freien Endes der Kolbenstange 112 unter der Wirkung der Schraubendruckfedern 118 und 120.

Dabei verschließt das Kugelventil 126 unter der Wirkung des Federpakets 124 die Durchgangsöffnung 128 des Kolbens 114, während das Kugelventil 136 die Tendenz hat, die Durchgangsöffnung 138 freizugeben. Das Öffnen der Kugelventile 136 wird dabei praktisch nicht behindert, da die Schraubendruckfeder 134 erheblich schwächer ausgebildet ist als die Schraubendruckfedern 118 und 120. Nach dem Öffnen der Kugelventile 136 kann Hydraulikfluid von der oberen Arbeitskammer 146 durch die Durchgangsbohrungen 138 des Kolbens 114 in die untere Arbeitskammer 144 strömen, so dass sich der Kolben 114 nach oben bewegt. Die von der Schraubendruckfeder 134 bereitgestellte Dämpfung ist dabei derart gewählt, dass der Funktionsbereitschaftszustand des Gleisbremsdämpfers 100 möglichst rasch wieder hergestellt ist, dass aber andererseits die Aufprallenergie des Kolbens 114 und der Kolbenstange 112 am oberen Ende des Zylinders 110 auf einen Betrag begrenzt wird, der kein Beschädigungsrisiko für die Zylinder-Kolben-Anordnung 108 birgt.

Zudem ist am oberen Ende des Zylinders 110 eine Endanschlagfeder 150 vorgesehen, die im dargestellten Ausführungsbeispiel wie das Federpaket 124 ebenfalls von einem Tellerfederpaket gebildet ist. Diese Endanschlagfeder 150 wirkt beim Ausfahren der Kolbenstange 112 mit der an dieser betriebsfest angeordneten Hülse 130 zusammen.

Ferner ist in dem Zylinder 110 dessen oberem Ende benachbart ein Einsatzelement 152 angeordnet, in dem ein gasgefüllter Ausgleichsraum 154 vorgesehen ist, der zur Aufnahme des von der Kolbenstange 112 bei deren Bewegung in den Zylinder 110 hinein verdrängten Volumens an Hydraulikfluid dient. Das in Figur 2 untere Ende 152a des Einsatzelements 152 umgibt die Kolbenstange 112 bzw. die mit dieser verbundene Hülse 130 unter Belassung eines engen Spalts 156. Auf diese Weise hält das untere Ende 152a des Einsatzelements 152 turbulente Strömungen von Hydraulikfluid, die von der Bewegung des Kolbens 114 in dem Zylinder 110 herrühren, vom Ausgleichsraum 154 fern und verhindert so das Aufschäumen des Hydraulikfluids an der Gas-Hydraulikfluid-Grenze.

Nachzutragen ist noch, dass an der Außenseite des Zylinders 110 Kühlrippen 158 vorgesehen sind, und dass in einer unteren Begrenzungsfläche 104a des Bodenteils 104 wenigstens eine Öffnung 160 vorgesehen ist. Durch diese Öffnung 160 kann die in dem Gehäuse 102 vorhandene Luft beim Einfahren des Deckelteils 106 in das Bodenteil 104 ausgetrieben und bei Wieder-Ausfahren des Deckelteils 106 Frischluft in das Gehäuse 102 eingesaugt werden kann. Hierdurch entsteht in dem Gehäuse 102 eine Luftströmung, die sich an den Kühlrippen 158 des Zylinders 110 vorbeibewegt und somit für eine wirksame Kühlung der Zylinder-Kolben-Anordnung 108 sorgt.

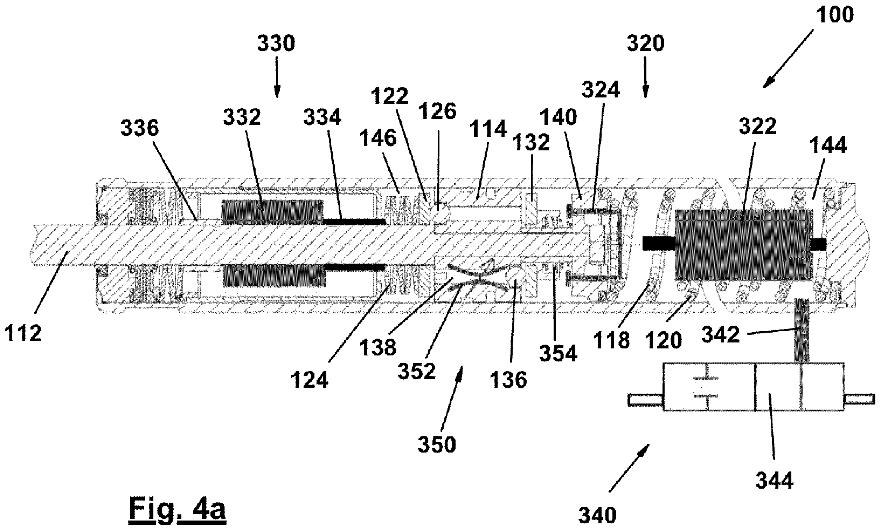

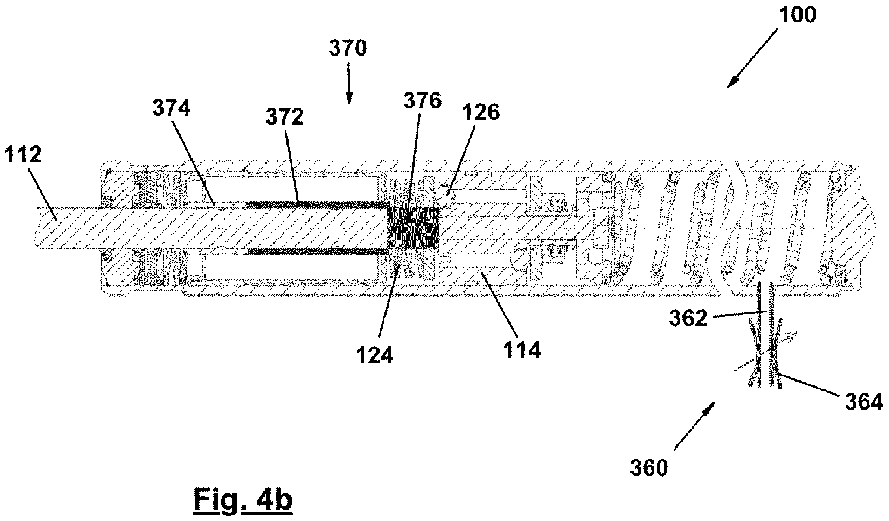

Um einer Überhitzung des Gleisbremsdämpfers 100 durch eine hohe Anzahl von Aktivierungen in sehr kurzer Zeit, beispielsweise dadurch, dass die Waggons von einer Rangierlokomotive aus einem Gleis gezogen werden, vorbeugen zu können, können verschiedene Hilfsmaßnahmen getroffen werden, die nachstehend mit Bezug auf die Figuren 1, 4a und 4b näher erläutert werden sollen. Ganz allgemein können dies sein: Sperrvorrichtungen 310 (siehe Figur 1) und 320 (siehe Figur 4a), welche die Kolbenstange 112 in ihrem eingefahrenen Zustand zurückhalten, dem wenigstens einen Dämpfungsventil 126 zugeordnete Dämpfkraftverringerungseinrichtungen 330, 340 (siehe Figur 4a) und 360, 370 (siehe Figur 4b) oder/und dem wenigstens einen weiteren Dämpfungsventil 136 zugeordnete Dämpfkrafterhöhungseinrichtungen 350 (siehe Figur 4a).

Es sei bereits an dieser Stelle darauf hingewiesen, dass diese Hilfsvorrichtungen, obgleich sie nachstehend jede für sich, d.h. voneinander getrennt in Aufbau und Funktion erläutert werden, selbstverständlich auch in unterschiedlichen Kombinationen miteinander eingesetzt werden können.

Die Sperrvorrichtung 310 gemäß Figur 1 ist dazu eingerichtet, die Kolbenstange 112 und damit das von dem Radkranz 208 betätigte Deckelteil 106 in einem eingefahrenen Zustand zu halten, so dass keine weiteren Aktivierungsvorgänge des Gleisbremsdämpfers 100 mehr erfolgen können. An dem Deckelteil 106 kann dazu eine Ringnut 312 vorgesehen sein, mit welcher ein Sperrelement 314 verrastbar ist. In einem aktivierten Zustand der Sperrvorrichtung 310 liegt das Sperrelement 314 dabei vorzugsweise federvorgespannt an dem Deckelteil 106 an, so dass dieses bei einer Bewegung der Kolbenstange 112 im Sinne eines Einfederns mit der Ringnut 312 verrastet, wenn diese die entsprechende Position erreicht hat. Folglich wird ein zeitlich nachgelagertes Ausfedern der Kolbenstange 112 und damit des Deckelteils 106 so lange blockiert, bis das Sperrelement 314 der Sperrvorrichtung 310 unter dem Einfluss einer (nicht dargestellten) Steuervorrichtung wieder aus der Ringnut 312 heraus bewegt und die Bewegung des Deckelteils 106 wieder freigegeben wird.

Eine weitere Ausführungsvariante einer derartigen Sperrvorrichtung ist in Figur 4a dargestellt. Die Sperrvorrichtung 320 umfasst einen Axialaktuator 322, welcher z.B. als ein Schaltmagnet ausgebildet sein kann. Ferner umfasst die Sperrvorrichtung 320 ein mit dem Abschlusselement 140 axialfest verbundenes Koppelelement 324, welches mit dem Axialaktuator 322 wirkverbunden werden kann. Befindet sich die Kolbenstange 112 in einem eingefahrenen Zustand, wird durch ein Betätigen des Axialaktuators 322, beispielsweise durch eine (nicht dargestellte) externe Steuerungseinheit, eine kraftschlüssige Verbindung zwischen dem Axialaktuator 322 und dem Koppelelement 324 hergestellt, so dass eine Ausfahrbewegung der Kolbenstange 112 unter dem Einfluss der Schraubendruckfedern 118 und 120 so lange verhindert wird, bis die kraftschlüssige Verbindung von Axialaktuator 322 und Koppelement 324 wieder gelöst und die Ausfahrbewegung der Kolbenstange 112 somit wieder freigegeben ist.

Ferner ist in Figur 4a eine Dämpfkraftverringerungseinrichtung 330 dargestellt, die dem wenigstens einen Dämpfungsventil 126 zugeordnet ist. Die Dämpfkraftverringerungseinrichtung 330 umfasst einen Ringmotor 332, welcher im Bereich der oberen Arbeitskammer 146 angeordnet ist. Der Ringmotor 332 kann dabei z.B. von einer (nicht dargestellte) externen Steuerungseinheit angesteuert werden. Ferner ist eine von dem Ringmotor angetriebene Gewindespindel 334 vorgesehen, welche axial entlang der Hauptachse der Kolbenstange 112 verschiebbar ist. Der Ringmotor 332 ist an der der Gewindespindel 334 abgewandten Seite axial über eine betriebsfest mit der Kolbenstange 112 verbundene Hülse 336 festgelegt. Die Gewindespindel 334 ist mit dem Federpaket 124 wirkverbunden, so dass durch ein axiales Verschieben der Gewindespindel 334 entlang der Hauptachse der Kolbenstange 112 die Vorspannung des Federpakets 124 gezielt eingestellt, d.h. erhöht bzw. verringert werden kann. Durch die Einstellbarkeit der Vorspannung des Federpakets 124 ist schließlich über die Stützplatte 122 das Öffnungsverhalten des Kugelventils 126 und somit die Dämpfungskraft des Gleisbremsdämpfers 100 im Sinne des Einfederns gezielt steuerbar. Wird die Vorspannung des Federpakets 124 beispielsweise sehr gering gewählt, so liegt nur noch eine sehr niedrige Dämpfungskraft des Gleisbremsdämpfers 100 im Sinne des Einfederns vor, was eine geringere Energiedissipation und damit eine geringere Erwärmung des Gleisbremsdämpfers 100 auch bei wiederholten Aktivierungsvorgängen in kurzer Zeit zur Folge hat.

Eine weitere in Figur 4a dargestellte Ausgestaltungsmöglichkeit einer Dämpfkraftverringerungseinrichtung 340 umfasst einen aktiv zuschaltbaren Bypass 342 zu einem außerhalb der Zylinder-Kolben-Anordnung 108 angeordneten (nicht dargestellten) Pufferbehälter 344. Die Steuerung der Zuschaltung, d.h. des Öffnens des Bypasses 342 kann hierbei z.B. über eine (nicht dargestellte) externe Steuerungseinrichtung erfolgen, welche ein elektrisch oder/und elektromotorisch oder/und elektromagnetisch oder/und pneumatisch oder/und hydraulisch betätigtes Ventil 344 öffnet. In einem zugeschalteten bzw. aktivierten Zustand des Bypasses 342 zu dem Pufferbehälter wird bei einer Bewegung des Kolbens 114 im Sinne des Einfederns nur noch ein vernachlässigbarer Hydraulikdruck in der unteren Arbeitskammer 144 aufgebaut, so dass es nur noch zu einer vernachlässigbaren Dämpfwirkung des Gleisbremsdämpfers 100 kommt. Dieser Effekt hat wiederum eine geringere Energiedissipation und damit eine geringere Erwärmung des Gleisbremsdämpfers 100 zur Folge.

Schließlich kann der in Figur 4a dargestellte Gleisbremsdämpfer 100 zusätzlich oder alternativ eine Dämpfkrafterhöhungseinrichtung 350 umfassen, welche im Bereich der dem weiteren Kugelventil 136 zugeordneten Durchgangsöffnung 138 des Kolbens 114 angeordnet ist. In der Durchgangsöffnung 138 kann hierzu eine temperatursensitive Drossel 352 vorgesehen sein, welche z.B. als eine ringförmige Dehnwachspatrone oder als ein Memorymetallelement ausgeführt ist. Bei einem Erwärmen des Gleisbremsdämpfers 100 in Folge einer Mehrzahl von Aktivierungen dehnt sich die temperatursensitive Drossel 352 aus und verengt somit die für das Hydraulikfluid zur Verfügung stehende Strömungsquerschnittsfläche durch die Durchgangsöffnung 138. Infolgedessen kann nur noch ein geringerer oder gar kein Volumenstrom des Hydraulikfluids durch die Durchgangsöffnung 138 fließen, so dass eine Bewegung des Kolbens 114 im Sinne des Ausfederns verlangsamt oder sogar vollständig unterbunden wird. Ferner kann zusätzlich oder alternativ eine die Schraubendruckfeder 134 ersetzende, temperatursensitive Schraubendruckfeder 354 (z.B. eine Memorymetallfeder) vorgesehen sein, welche sich bei einer Erwärmung axial ausdehnt und somit die über die Stützplatte 132 übertragene Kraft auf das weitere Kugelventil 136 im Sinne des Verschließens erhöht. Der Effekt des Verlangsamens oder Unterbindens des Ausfahrens des Kolbens 114 mit steigender Temperatur kann somit ebenfalls erreicht oder/und nochmals verstärkt werden. Im Ergebnis ist somit gleichermaßen eine Begrenzung der Erwärmung des Gleisbremsdämpfers 100 erzielbar, wodurch eine thermisch bedingte Beschädigung vermieden werden kann.

Ein derartiges temperatursensitives Ventilelement kann auch bei der Dämpfkraftverringerungseinrichtung 340 anstelle des Ventilelements 344 zum Einsatz kommen. Eine derart ausgebildete Dämpfkraftverringerungseinrichtung 360 ist in Figur 4b dargestellt. Bei dieser erfolgt die Zuschaltung des Bypasses 362 zu dem (nicht dargestellten) Pufferbehälter mittels des temperatursensitiven Ventils 364, welches bei Erreichen einer vorbestimmten Temperatur selbsttätig öffnet, so dass keine Zufuhr von Energie und/oder Steuerungssignalen erforderlich ist.

In Figur 4b ist aber auch noch eine weitere Ausführungsform einer Dämpfkraftverringerungseinrichtung 370 dargestellt. Die Dämpfkraftverringerungseinrichtung 370 umfasst dabei eine Memorymetallhülse 372, welche an der dem Kolben 114 abwandten Seite axial über eine betriebsfest mit der Kolbenstange 112 verbundene Hülse 374 festgelegt ist. Ferner ist eine Dehnwachspatrone 376 vorgesehen, welche sich bei einem Erwärmen axial entlang der Hauptachse der Kolbenstange 112 ausdehnt. Die Dehnwachspatrone 376 ist mit dem Federpaket 124 wirkverbunden. Durch ein erwärmungsbedingtes Ausdehnen der Dehnwachspatrone 376 kann somit die Vorspannung des Federpakets 124 gezielt verringert werden, was schließlich zu einer reduzierten Öffnungskraft des Kugelventils 126 führt. Folglich wird die Dämpfungskraft des Gleisbremsdämpfers 100 im Sinne des Einfederns ohne eine externe Steuerungseinrichtung mit steigender Temperatur selbsttätig reduziert, was letztlich zu einer nur noch vernachlässigbaren Dämpfwirkung des Gleisbremsdämpfers 100 führt und schließlich eine weitere Möglichkeit zur Verhinderung einer betriebsdingten Überhitzung des Gleisbremsdämpfers 100 darstellt. Analog steigt die Vorspannung des Federpakets 124 bei einer Abkühlung wiederum an, was zu einer Verstärkung der Dämpffunktion des Gleisbremsdämpfers 100 und somit zu dessen selbständiger Reaktivierung führt.

## Patentansprüche

1. Gleisbremsdämpfer (100), umfassend
• eine Zylinder-Kolben-Anordnung (108) mit
• einem Zylinder (110),
• einem in dem Zylinder (110) axial beweglich geführten Kolben (114), der den Innenraum des Zylinders (110) in zwei Arbeitskammern (144, 146) unterteilt,
• einer mit dem Kolben (114) verbundenen und an einem Ende (110a) des Zylinders (110) dichtend aus diesem herausgeführten Kolbenstange (112),
• einer Ausschubanordnung (118/120), welche den Kolben (114) in einem die Kolbenstange (112) aus dem Zylinder (110) heraus schiebenden Sinne beaufschlagt, und
• einer dem Kolben (114) zugeordneten Dämpfungseinrichtung (126/136),
wobei die Dämpfungseinrichtung (126/136) wenigstens ein Dämpfungsventil (126) umfasst mit wenigstens einem Kolbenkanal (128), welcher den Kolben (114) unter Verbindung der beiden Arbeitskammern (144, 146) durchsetzt, und wenigstens einem dem Kolbenkanal (128) zugeordneten Verschlusselement (126a),
wobei das wenigstens eine Verschlusselement (126a) im Sinne des Verschließens des wenigstens einen Kolbenkanals (128) federvorgespannt und von dem Hydraulikdruck, welcher in der von der Kolbenstange (112) abgewandten Arbeitskammer (144) herrscht, im Sinne des Öffnens des Dämpfungsventils (126) beaufschlagt ist, und
wobei das wenigstens eine Verschlusselement (126a) vorzugsweise aus Metall, beispielsweise Stahl oder Kupfer, oder aus Kunststoff, beispielsweise Polytetrafluorethylen, gebildet ist,
**dadurch gekennzeichnet, dass** das wenigstens eine Verschlusselement (126a) als Kugel ausgebildet ist,
dass der Kolben (114) von einer Mehrzahl von die Arbeitskammern (144, 146) verbindenden Kolbenkanälen (128) durchsetzt ist, von denen jedem ein gesondertes Verschlusselement (126a) zugeordnet ist,
wobei den kugelartigen Verschlusselementen (126a) eine gemeinsame Stützplatte (122) oberhalb des Kolbens (114) zugeordnet ist, welche mittels wenigstens einer gesondert als Federpaket ausgebildeten Ventilvorspannfeder (124) im Sinne des Verschließens des Kolbenkanals (128) gegen die kugelartigen Verschlusselemente (126a) federvorgespannt ist, und
dass durch die Verschlusselemente (126a) stets ein vorbestimmter Mindestabstand zwischen dem Kolben (114) und der Stützplatte (122) vorhanden ist.

2. Gleisbremsdämpfer nach Anspruch 1,
**dadurch gekennzeichnet, dass** sich die wenigstens eine Ventilvorspannfeder (124) an einem mit der Kolbenstange (112) betriebsfest verbundenen Element (130) abstützt,
wobei vorzugsweise das von der Ventilvorspannfeder (124) abgewandte Ende des mit der Kolbenstange (112) verbundenen Elements (130) zum Eingriff mit einer Endanschlagsfeder (150) dient.

3. Gleisbremsdämpfer nach einem der Ansprüche 1 oder 2,
**dadurch gekennzeichnet, dass** jenem Ende (110a) des Zylinders (110), an welchem die Kolbenstange (122) aus dem Zylinder (110) austritt, benachbart ein Einsatzelement (152) in der der Kolbenstange (114) zugewandten Arbeitskammer (146) angeordnet ist.

4. Gleisbremsdämpfer nach einem der Ansprüche 1 bis 3,
**dadurch gekennzeichnet, dass** die Dämpfungseinrichtung (126/136) wenigstens ein weiteres Dämpfungsventil (136) umfasst mit wenigstens einem den Kolben (114) im Sinne einer Verbindung der beiden Arbeitskammern (144, 146) durchsetzenden weiteren Kolbenkanal (138) und wenigstens einem dem weiteren Kolbenkanal (138) zugeordneten weiteren Verschlusselement (136a), wobei das wenigstens eine weitere Verschlusselement (136a) von wenigstens einer weiteren Ventilvorspannfeder (134) im Sinne des Verschließens des wenigstens einen weiteren Kolbenkanals (138) vorgespannt und von dem Hydraulikdruck, welcher in der von der Kolbenstange (112) durchsetzten Arbeitskammer (146) herrscht, im Sinne des Öffnens des wenigstens einen weiteren Dämpfungsventils (136) beaufschlagt ist, und
wobei vorzugsweise der Kolben (114) von einer Mehrzahl von die Arbeitskammern (144, 146) verbindenden weiteren Kolbenkanälen (138) durchsetzt ist, von denen jedem ein gesondertes weiteres Verschlusselement (136a) zugeordnet ist, wobei den weiteren Verschlusselementen (136a) eine gemeinsame weitere Stützplatte (132) zugeordnet ist, auf weiche die weitere Ventilvorspannfeder (134) einwirkt.

5. Gleisbremsdämpfer nach Anspruch 4,
**dadurch gekennzeichnet, dass** sich die weitere Ventilvorspannfeder (134) an einem Element (140) abstützt, das mit einem den Kolben (114) durchsetzenden Abschnitt (112a) der Kolbenstange (112) betriebsfest verbunden ist.

6. Gleisbremsdämpfer nach einem der Ansprüche 1 bis 5,
**dadurch gekennzeichnet, dass** die Ausschubanordnung (118/120) wenigstens eine Ausschubfeder, beispielsweise wenigstens eine Schraubendruckfeder (118, 120) oder/und wenigstens eine Tellerfeder, welche in der von der Kolbenstange (112) abgewandten Arbeitskammer (144) angeordnet ist, oder/und wenigstens ein Druckgasvolumen (154) umfasst.

7. Gleisbremsdämpfer nach einem der Ansprüche 1 bis 6,
**dadurch gekennzeichnet, dass** der Zylinder (112) an seiner äußeren Oberfläche mit Kühlrippen (158) ausgebildet ist.

8. Gleisbremsdämpfer nach einem der Ansprüche 1 bis 7,
**dadurch gekennzeichnet, dass** die Zylinder-Kolben-Anordnung (108) in einem Gehäuse (102) aufgenommen ist, welches ein dem Zylinder (110) zugeordnetes Bodenteil (104) und ein der Kolbenstange (112) zugeordnetes, relativ zum Bodenteil (104) verschiebbares Deckelteil (106) umfasst.

9. Gleisbremsdämpfer nach einem der Ansprüche 1 bis 8,
**dadurch gekennzeichnet, dass** die Dämpfungseinrichtung (126/136) eine dem wenigstens einen Dämpfungsventil (126) zugeordnete Dämpfkraftverringerungseinrichtung (330; 340; 360; 370) umfasst, insbesondere eine Dämpfkraftverringerungseinrichtung (330; 340; 360; 370) welche dazu ausgelegt ist, die Dämpfkraft des wenigstens einen Dämpfungsventils (126) bei einem Anstieg der Temperatur des Gleisbremsdämpfers zu verringern.

10. Gleisbremsdämpfer nach einem der Ansprüche 4 bis 9,
**dadurch gekennzeichnet, dass** die Dämpfungseinrichtung (126/136) eine dem wenigstens einen weiteren Dämpfungsventil (136) zugeordnete Dämpfkrafterhöhungseinrichtung (350) umfasst, insbesondere eine Dämpfkrafterhöhungseinrichtung (350), welche dazu ausgelegt ist, die Dämpfkraft des wenigstens einen weiteren Dämpfungsventils (136) bei einem Anstieg der Temperatur des Gleisbremsdämpfers zu erhöhen.

11. Gleisbremsdämpfer nach einem der Ansprüche 1 bis 10,
**dadurch gekennzeichnet, dass** er eine Sperrvorrichtung (310, 320) umfasst, welche dazu ausgelegt ist, die aus Kolben (114) und Kolbenstange (112) gebildete Einheit in einem in den Zylinder (110) eingefahrenen Zustand der Kolbenstange zu halten.

12. Gleisbremsdämpfer nach einem der Ansprüche 9 bis 11,
**dadurch gekennzeichnet, dass** die dem wenigstens einen Dämpfungsventil (126) zugeordnete Dämpfkraftverringerungseinrichtung (360; 370) oder/und die dem wenigstens einen weiteren Dämpfungsventil (136) zugeordnete Dämpfkrafterhöhungseinrichtung (350) oder/und die Sperrvorrichtung (310, 320) eine sich bei einer Temperaturänderung selbsttätig verstellende Stellvorrichtung umfasst.

13. Gleisbremsdämpfer nach einem der Ansprüche 9 bis 12,
**dadurch gekennzeichnet, dass** die dem wenigstens einen Dämpfungsventil (126) zugeordnete Dämpfkraftverringerungseinrichtung (330, 340) oder/und die dem wenigstens einen weiteren Dämpfungsventil (136) zugeordnete Dämpfkrafterhöhungseinrichtung oder/und die Sperrvorrichtung (310, 320) eine elektrisch oder/und elektromotorisch oder/und elektromagnetisch oder/und pneumatisch oder/und hydraulisch betätigbare Stellvorrichtung umfasst.

## Claims

1. Rail brake damper (100) comprising
• a cylinder-piston arrangement (108) having
• a cylinder (110),
• a piston (114) that is guided in the cylinder (110) in an axially movable manner and divides the inner chamber of the cylinder (110) into two working chambers (144, 146),
• a piston rod (112) connected to the piston (114) and guided out of the cylinder (110) at one end (110a) thereof in a sealed manner,
• an ejector arrangement (118/120), which acts on the piston (114) in such a manner as to slide the piston rod (112) out of the cylinder (110), and
• a damping device (126/136) associated with the piston (114),
wherein the damping device (126/136) comprises at least one damping valve (126) having at least one piston channel (128) which passes through the piston (114), thereby connecting the two working chambers (144, 146), and at least one closure element (126a) associated with the piston channel (128),
the at least one closure element (126a) being spring-biased in such a manner as to close the at least one piston channel (128), and the hydraulic pressure active in the working chamber (144) remote from the piston rod (112) acting on said element in such a manner as to open the damping valve (126),
the at least one closure element (126a) preferably being made of metal, for example steel or copper, or of plastics material, for example polytetrafluoroethylene,
**characterised in that** the at least one closure element (126a) is formed as a ball, that a plurality of piston channels (128) connecting the working chambers (144, 146) pass through the piston (114) and each is associated with a separate closure element (126a),
wherein the ball-like closure elements (126a) being associated with a common support plate (122) above the piston (114), which is spring-biased against the ball-like closure elements (126a) by means of at least one valve-biasing spring (124) formed separate as a spring assembly in such a manner as to close the piston channel (128), and
that by the closure elements (126a) there is always a predetermined minimum distance between the piston (114) and the support plate (122).

2. Rail brake damper according to claim 1,
**characterised in that** the at least one valve-biasing spring (124) is supported against an element (130) that is operatively connected to the piston rod (112),
wherein preferably the end, remote from the valve-biasing spring (124), of the element (130) connected to the piston rod (112) is used to engage with a limit stop spring (150).

3. Rail brake damper according to any of claims 1 or 2,
**characterised in that,** adjacently to the end (110a) of the cylinder (110) at which the piston rod (122) exits the cylinder (110), an insert element (152) is arranged in the working chamber (146) facing to the piston rod (114).

4. Rail brake damper according to any of claims 1 to 3,
**characterised in that** the damping device (126/136) comprises at least one additional damping valve (136) having at least one additional piston channel (138), which passes through the piston (114) in such a manner as to connect the two working chambers (144, 146), and at least one additional closure element (136a) associated with the additional piston channel (138),
the at least one additional closure element (136a) being spring-biased by at least one additional valve-biasing spring (134) in such a manner as to close the at least one additional piston channel (138), and the hydraulic pressure active in the working chamber (146) through which the piston rod (112) passes acting on said element in such a manner as to open the at least one additional damping valve (136), and
wherein preferably a plurality of additional piston channels (138) connecting the working chambers (144, 146) pass through the piston (114) and each is associated with a separate additional closure element (136a), wherein the additional closure elements (136a) being associated with an additional common support plate (132), on which the additional valve-biasing spring (134) acts.

5. Rail brake damper according to claim 4,
**characterised in that** the additional valve-biasing spring (134) is supported against an element (140) that is operatively connected to a portion (112a) of the piston rod (112) that passes through the piston (114).

6. Rail brake damper according to any of claims 1 to 5,
**characterised in that** the ejector arrangement (118/120) comprises at least one ejector spring, for example at least one helical compression spring (118, 120) and/or at least one disc spring arranged in the working chamber (144) remote from the piston rod (112), and/or at least one compressed-gas volume (154).

7. Rail brake damper according to any of claims 1 to 6,
**characterised in that** the cylinder (112) is formed having cooling ribs (158) on its outer surface.

8. Rail brake damper according to any of claims 1 to 7,
**characterised in that** the cylinder-piston arrangement (108) is received in a housing (102) that comprises a bottom part (104) associated with the cylinder (110), and a cover part (106) that is associated with the piston rod (112) and is displaceable relative to the bottom part (104).

9. Rail brake damper according to any of claims 1 to 8,
**characterised in that** the damping device (126/136) comprises a damping-force reduction device (330; 340; 360; 370) associated with the at least one damping valve (126), in particular a damping-force reduction device (330; 340; 360; 370) designed to reduce the damping force of the at least one damping valve (126) when the temperature of the rail brake damper increases.

10. Rail brake damper according to any of claims 4 to 9,
**characterised in that** the damping device (126/136) comprises a damping-force increasing device (350) associated with the at least one additional damping valve (136), in particular a damping-force increasing device (350) designed to increase the damping force of the at least one additional damping valve (136) when the temperature of the rail brake damper increases.

11. Rail brake damper according to any of claims 1 to 10,
**characterised in that** said damper comprises a locking apparatus (310, 320) designed to hold the unit formed by the piston (114) and piston rod (112) in a state in which the piston rod is inserted into the cylinder (110).

12. Rail brake damper according to any of claims 9 to 11,
**characterised in that** the damping-force reduction device (360; 370) associated with the at least one damping valve (126) and/or the damping-force increasing device (350) associated with the at least one additional damping valve (136) and/or the locking apparatus (310, 320) comprises an adjustment apparatus that adjusts automatically when the temperature changes.

13. Rail brake damper according to any of claims 9 to 12,
**characterised in that** the damping-force reduction device (330, 340) associated with the at least one damping valve (126) and/or the damping-force increasing device associated with the at least one additional damping valve (136) and/or the locking apparatus (310, 320) comprises an adjustment apparatus that can be actuated electrically and/or in a motorised manner and/or electromagnetically and/or pneumatically and/or hydraulically.

## Revendications

1. Amortisseur de frein de voie (100), comprenant
• un ensemble cylindre-piston (108) avec
• un cylindre (110),
• un piston (114) guidé de manière mobile axialement dans le cylindre (110), qui divise l'espace intérieur du cylindre (110) en deux chambres de travail (144, 146),
• une tige de piston (112) reliée au piston (114) et sortant de manière étanche du cylindre (110) à une extrémité (110a) de celui-ci,
• un dispositif d'expulsion (118/120), qui sollicite le piston (114) dans un sens poussant la tige de piston (112) hors du cylindre (110), et
• un dispositif d'amortissement (126/136) associé au piston (114),
dans lequel le dispositif d'amortissement (126/136) comprend au moins une soupape d'amortissement (126) avec au moins un canal de piston (128) qui traverse le piston (114) en reliant les deux chambres de travail (144, 146), et au moins un élément de fermeture (126a) associé au canal de piston (128),
dans lequel ledit au moins un élément de fermeture (126a) est précontraint par ressort dans le sens de la fermeture dudit au moins un canal de piston (128) et est sollicité par la pression hydraulique qui règne dans la chambre de travail (144) opposée à la tige de piston (112) dans le sens de l'ouverture de la soupape d'amortissement (126), et
dans lequel ledit au moins un élément de fermeture (126a) est formé de préférence en métal, par exemple en acier ou en cuivre, ou en matière plastique, par exemple en polytétrafluoroéthylène,
**caractérisé en ce que** ledit au moins un élément de fermeture (126a) est formé comme une bille,
**en ce que** le piston (114) est traversé par une pluralité de canaux de piston (128) reliant les chambres de travail (144, 146), dont chacun est associé à un élément de fermeture (126a) séparé,
dans lequel une plaque d'appui (122) commune est associée aux éléments de fermeture (126a) de type sphérique au-dessus du piston (114), laquelle est précontrainte par ressort contre les éléments de fermeture (126a) de type sphérique au moyen d'au moins un ressort de précontrainte de soupape (124) réalisé séparément sous forme de paquet de ressorts dans le sens de la fermeture du canal de piston (128), et
**en ce que**, grâce aux éléments de fermeture (126a), il existe toujours une distance minimale prédéterminée entre le piston (114) et la plaque d'appui (122).

2. Amortisseur de frein de voie selon la revendication 1,
**caractérisé en ce que** ledit au moins un ressort de précontrainte de soupape (124) s'appuie sur un élément (130) relié de manière opérationnelle à la tige de piston (112),
dans lequel de préférence, l'extrémité de l'élément (130) relié à la tige de piston (112), qui est détournée du ressort de précontrainte de soupape (124), sert à s'engager avec un ressort de butée de fin de course (150).

3. Amortisseur de frein de voie selon l'une des revendications 1 ou 2, **caractérisé en ce que** l'extrémité (110a) du cylindre (110) à laquelle la tige de piston (122) sort du cylindre (110) est adjacente à un élément d'insertion (152) dans la chambre de travail (146) orientée vers la tige de piston (114).

4. Amortisseur de frein de voie selon l'une des revendications 1 à 3, **caractérisé en ce que** le dispositif d'amortissement (126/136) comprend au moins une autre soupape d'amortissement (136) avec au moins un autre canal de piston (138) traversant le piston (114) dans le sens d'une connexion des deux chambres de travail (144, 146) et au moins un autre élément de fermeture (136a) associé à l'autre canal de piston (138), dans lequel ledit au moins un autre élément de fermeture (136a) est précontraint par au moins un autre ressort de précontrainte de soupape (134) dans le sens de la fermeture d'au moins un autre canal de piston (138) et est sollicité par la pression hydraulique qui règne dans la chambre de travail (146) traversée par la tige de piston (112) dans le sens de l'ouverture d'au moins une autre soupape d'amortissement (136), et
dans lequel de préférence le piston (114) est traversé par une pluralité d'autres canaux de piston (138) reliant les chambres de travail (144, 146), dont chacun est associé à un autre élément de fermeture (136a) séparé, dans lequel une autre plaque d'appui (132) commune est associée aux autres éléments de fermeture (136a), sur laquelle agit l'autre ressort de précontrainte de soupape (134).

5. Amortisseur de frein de voie selon la revendication 4,
**caractérisé en ce que** l'autre ressort de précontrainte de soupape (134) s'appuie sur un élément (140) qui est relié de manière fixe en fonctionnement à une section (112a) de la tige de piston (112) traversant le piston (114).

6. Amortisseur de frein de voie selon l'une des revendications 1 à 5,
**caractérisé en ce que** l'agencement d'expulsion (118/120) comprend au moins un ressort d'expulsion, par exemple au moins un ressort hélicoïdal de compression (118, 120) ou/et au moins un ressort à disque, qui est disposé dans la chambre de travail (144) opposée à la tige de piston (112), ou/et au moins un volume de gaz comprimé (154).

7. Amortisseur de frein de voie selon l'une quelconque des revendications 1 à 6, **caractérisé en ce que** le cylindre (112) est formé avec des ailettes de refroidissement (158) sur sa surface extérieure.

8. Amortisseur de frein de voie selon l'une des revendications 1 à 7,
**caractérisé en ce que** l'ensemble cylindre-piston (108) est logé dans un boîtier (102) comprenant une partie de fond (104) associée au cylindre (110) et une partie de couvercle (106) associée à la tige de piston (112) et mobile en translation par rapport à la partie de fond (104).

9. Amortisseur de frein de voie selon l'une des revendications 1 à 8,
**caractérisé en ce que** le dispositif d'amortissement (126/136) comprend un dispositif de réduction de force d'amortissement (330 ; 340 ; 360 ; 370) associé à ladite au moins une soupape d'amortissement (126), en particulier un dispositif de réduction de force d'amortissement (330 ; 340 ; 360 ; 370) qui est adapté pour réduire la force d'amortissement de ladite au moins une soupape d'amortissement (126) en cas d'augmentation de la température de l'amortisseur de frein de voie.

10. Amortisseur de frein de voie selon l'une des revendications 4 à 9,
**caractérisé en ce que** le dispositif d'amortissement (126/136) comprend un dispositif d'augmentation de la force d'amortissement (350) associé à ladite au moins une autre soupape d'amortissement (136), notamment un dispositif d'augmentation de la force d'amortissement (350) qui est adapté pour augmenter la force d'amortissement de ladite au moins une autre soupape d'amortissement (136) en cas d'augmentation de la température de l'amortisseur de frein de voie.

11. Amortisseur de frein de voie selon l'une des revendications 1 à 10,
**caractérisé en ce qu'**il comprend un dispositif de blocage (310, 320) adapté pour maintenir l'ensemble formé par le piston (114) et la tige de piston (112) dans un état rétracté de la tige de piston dans le cylindre (110).

12. Amortisseur de frein de voie selon l'une des revendications 9 à 11,
**caractérisé en ce que** le dispositif de réduction de force d'amortissement (360 ; 370) associé audit au moins une soupape d'amortissement (126) ou/et le dispositif d'augmentation de la force d'amortissement (350) associé audit au moins une autre soupape d'amortissement (136) ou/et le dispositif de blocage (310, 320) comprend un dispositif de réglage se réglant automatiquement lors d'une variation de température.

13. Amortisseur de frein de voie selon l'une des revendications 9 à 12,
**caractérisé en ce que** le dispositif de réduction de force d'amortissement (330, 340) associé à ladite au moins une soupape d'amortissement (126) ou/et le dispositif d'augmentation de la force d'amortissement associé à ladite au moins une autre soupape d'amortissement (136) ou/et le dispositif de blocage (310, 320) comprend un dispositif de réglage à actionnement électrique ou/et électromoteur ou/et électromagnétique ou/et pneumatique ou/et hydraulique.
